(19) Europäisches Patentamt
European Patent Office
Office européen des brevets

(11) Veröffentlichungsnummer : **0 362 457 B1**

(12) # EUROPÄISCHE PATENTSCHRIFT

(45) Veröffentlichungstag der Patentschrift :
**13.05.92 Patentblatt 92/20**

(51) Int. Cl.⁵ : **A22C 17/04**

(21) Anmeldenummer : **89101418.5**

(22) Anmeldetag : **27.01.89**

(54) **Einrichtung zur Entfernung des Fleisches von den Knochen der Schenkelteile von Geflügelstücken.**

(30) Priorität : **03.10.88 SU 4485536**

(43) Veröffentlichungstag der Anmeldung :
**11.04.90 Patentblatt 90/15**

(45) Bekanntmachung des Hinweises auf die
Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**DE-A- 3 227 430
US-A- 3 210 801
US-A- 3 348 261
US-A- 4 138 050
US-A- 4 488 332**

(73) Patentinhaber :
**NAUCHNO-PROIZVODSTVENNOE
OBIEDINENIE
PTITSEPERERABATYVAJUSCHEI
PROMYSHLENNOSTI "KOMPLEX" (NPO
"KOMPLEX")
Solnechnogorsky raion, p/o Rzhavki
Moskovskaya oblast (SU)**

(72) Erfinder : **Kulishev,Boris Vasilievich
Solnechnogorsky raion p/o Rzhavki, 16, kv.83
Moskovskaya oblast (SU)**
Erfinder : **Petlakh,Yakov Matveevich
Solnechnogorsky raion p/o Rzhavki, 16, kv.98
Moskovskaya oblast (SU)**
Erfinder : **Elizarov,Boris Vladimirovich
Klinsky raion p/o Vozdvizhenskoe, 5, kv.44
Moskovskaya oblast (SU)**

(74) Vertreter : **Patentanwälte Zellentin & Partner
Zweibrückenstrasse 15
W-8000 München 2 (DE)**

## Beschreibung

### Gebiet der Technik

Die Erfindung betrifft Einrichtungen zur Verarbeitung von Fleisch und Geflügel und bezieht sich insbesondere auf eine Einrichtung zur Entfernung des Fleisches von den Knochen der Schenkelteile (Ober- und Unterschenkel) von Geflügelstücken.

Die vorliegende Erfindung kann mit größtem Erfolg zur Verarbeitung von Rohprodukten der industriellen Geflügelzucht bei der Entfernung des Fleisches von den Schenkel- und Wadenbeinen ausgeschlachteter und gerupfter Geflügelstücke verwendet werden.

Außerdem kann die Erfindung zum Auslösen der Knochen aus dem Fleisch ähnlicher Rohproduktteile der industriellen Viehzucht (z.B. von Schafen, Kühen, Schweinen, Ziegen usw.) verwendet werden.

### Stand der Technik

Gegenwärtig ruft der immer größer werdende Umfang der industriellen Geflügelerzeugung eine Erweiterung des Sortiments von Geflügelfleischerzeugnissen hervor. Die industrielle Produktion von knochenlosen kulinarischen Erzeugnissen aus Geflügelfleisch ist unmöglich ohne Mechanisierung des arbeitsintensivsten Vorganges bei der Zerlegung (Verarbeitung) von Geflügel, d.h. der Entfernung des Fleisches von den Knochen (Auslösen der Knochen aus dem Fleisch).

Bekannt ist eine Einrichtung zur Abtrennung des Fleisches von den Röhrenknochen (Schenkel- und Wadenbeinen) ausgeschlachteter und gerupfter Geflügelstücke, die einen Rahmen, einen als in Längsrichtung verschiebbaren Plunger ausgebildeten Stößel, an dessen Stirnende eine federbelastete Greifvorrichtung zum Ergreifen eines Schinkenteils eingebaut ist, welche eine Vertiefung aufweist, die in Größe und Form mit der Epiphyse des Schenkel- oder Wadenbeines übereinstimmt. Zur Einrichtung gehören auch ein Schneidwerkzeug, das durch ein Paar von elastischen Trennwänden gebildet ist, die Schlitze zum Durchgang des Knochens aufweisen und das Fleisch zusammenschieben, und ein Anschlag, der als Flansch ausgebildet ist, und die Bewegung des Plungers (US, A, 4488332) begrenzt. Als Nachteile dieser Einrichtung sind eine Periodizität ihrer Arbeitsweise, die mit Stillsetzungen zum Eintrag und Austrag von Rohprodukten verbunden ist, eine niedrige Leistungsfähigkeit und die Notwendigkeit einer vorherigen Zerlegung der Schinkenteile in Oberschenkel- und Unterschenkelbeine und die Herstellung eines Fleischstückes aus einem Schenkel- oder einem Wadenbein zu bezeichnen.

Ferner ist eine Einrichtung (US, A, 4669150) zur Entfernung des Fleisches von den Knochen der Schinkenteile von Geflügelstücken bekannt, die ein Schneidwerkzeug, eine Vorrichtung zum Ergreifen eines Schinkenteils, ein Gestell, eine Kopierschablone und einen Antrieb enthält. Das Schneidwerkzeug ist als biegsames Bandmesser ausgebildet, das eine Hin-und Herbewegung in einer Richtung ausführt, die zur Knochenachse senkrecht ist. Die Vorrichtung zum Ergreifen eines Schinkenteils ist in Form von Bügeln ausgeführt und gewährleistet das Ergreifen und das Festhalten der Knochenenden. Die Kopierschablone stellt ein System von krummlinigen Führungen dar, die die Bewegung des Bandmessers längs des Knochens nach einer Bahn sichern, die der Krümmung der Knochen (Beine) nahe ist.

Die Einrichtung arbeitet wie folgt.

Anatomisch gewonnene Schinkenteile werden mit entgegengesetzten Enden in die Vorrichtung zum Ergreifen von Hand eingesetzt, die diese Schinkenteile im weiteren automatisch fixiert. Durch das Bandmesser, das eine Hin-und Herbewegung ausführt und sich damit längs des Knochens bewegt, wird das Fleisch von den Knochen entfernt. Nach der Abtrennung des Fleisches wird die Greifvorrichtung automatisch geöffnet und der Knochen aus der Einrichtung entfernt.

Da sich der Krümmungswinkel der Schenkelteile und deren Längenmaße in einem weiten Bereich ändern, hat das Kopiersystem ein kompliziertes Umrichtsystem und die Benutzung des Bandmessers gewährleistet kein kreisförmiges Ergreifen des Fleisches und damit keine vollständige Abtrennung desselben. Darüber hinaus wird die Leistungsfähigkeit der Einrichtung in starkem Maße durch die manuelle Einlegung der Knochenenden des Schinkenteils in die Einrichtung begrenzt. Als wesentlicher Nachteil dieser Einrichtung wird auch angesehen, daß darin keine Möglichkeit vorgesehen ist, das ganze Fleischstück vom Schenkel- und Wadenbein des Schinkenteils gleichzeitig zu trennen, was die Leistung der Einrichtung senkt und die Qualität des erhaltenen Fleisches verschlechtert.

Der Erfindung liegt die Aufgabe zugrunde, eine solche Einrichtung zur Entfernung des Fleisches von den Knochen der Schinkenteile von Geflügelstücken zu schaffen, deren Bauart die Möglichkeit bietet, das ganze Fleischstück vom Schenkel- und Wadenbein gleichzeitig ohne deren vorherige Zergliederung zu entfernen.

Die gestellte Aufgabe wird dadurch gelöst, daß in der Einrichtung zur Entfernung des Fleisches von den Knochen der Schinkenteile von Geflügelstücken, die eine Greifvorrichtung zum Ergreifen eines Schinkenteils und ein Schneidwerkzeug zum Abschneiden des Fleisches von den Knochen enthält, gemäß der Erfindung die Greifvorrichtung zum Ergreifen eines Schinkenteils aus einem Paar von gleichachsigen Zylindern mit Hohlräumen für die Unterbringung der Knochen des Schinkenteils, wobei die Zylinder zueinander hin-und herbewegbar angeordnet sind, und aus einer Aufgaberinne, die die Zylinder in der Bearbeitungszone des Schinkenteils teilweise umgibt, aufgebaut ist, wobei das Schneidwerkzeug einen Hohlzylinder mit einer stirnseitigen Schneidkante dar stellt, der koaxial auf einem der genannten Zylinder mit der Möglichkeit einer Hin-und Herbewegung innerhalb der Rinne in bezug auf diesen Zylinder der Greifvorrichtung angeordnet ist.

Die erfindungsgemäße Bauart der Greifvorrichtung ermöglicht die Bearbeitung unzerteilter Schinkenteile und die gleichzeitige Entfernung des Schenkel- und Wadenbeins ohne deren vorherige Zergliederung, wodurch sich eine bessere Qualität des knochenlosen Fleisches in einem ganzen Stück ergibt, ohne daß dabei die natürliche Muskelstruktur beschädigt wird.

Dadurch wird die Leistung der Einrichtung wesentlich erhöht und der Arbeitsaufwand für die Bearbeitung von Geflügelstücken gesenkt, weil die Zerlegung der Schinkenteile in Schenkel-und Wadenbeine entfällt.

Es ist vorteilhaft, daß die Zylinder der Greifvorrichtung an den einander zugekehrten Stirnseiten kegelige Innenausdrehungen aufweisen.

Solch eine Konstruktion der Zylinder der Greifvorrichtung erhöht die Zuverlässigkeit beim Ergreifen der freien Knochenenden des Schinkenteils während der gegenläufigen Verschiebung dieser Zylinder zueinander innerhalb der Rinne.

Es ist auch vorteilhaft, daß im Hohlraum jedes Zylinders der Greifvorrichtung ein zu diesem Zylinder hin- und herbewegbar angeordneter Anschlag untergebracht ist.

Die vorhandenen Anschläge gewährleisten das Ausstoßen der bearbeiteten Knochen des Schinkenteils aus den Innenräumen der Zylinder der Greifvorrichtung.

Bei einer bevorzugten Ausführungsform der Erfindung ist auf einem der Zylinder der Greifvorrichtung koaxial zu diesem und gegenüber dem Schneidwerkzeug ein Hohlzylinder mit Möglichkeit einer Hin-und Herbewegung innerhalb der Rinne in bezug auf die Zylinder der Greifvorrichtung angeordnet, wobei das Stirnende dieses Hohlzylinders, das dem Schneidwerkzeug zugewandt ist, eine kegelige Ausdrehung aufweist.

Durch eine solche Bauart der Einrichtung wird die Zuverlässigkeit beim Ergreifen der freien Knochenenden des Schinkenteils erhöht.

Nach einer anderen Ausführungsform der Erfindung enthält die Einrichtung eine Vielzahl von Rinnen und eine dieser entsprechende Paarmenge von auf Trägern angeordneten Zylindern der Greifvorrichtung zum Ergreifen eines Schinkenteils, wobei ein Antrieb für die synchrone Bewegung der Zylinder und der Rinnen vorgesehen ist, um eine Arbeitsposition zu erzeugen, in der die Schinkenteile des Geflügelstückes bearbeitet werden.

Diese Bauart der Einrichtung ermöglicht eine wesentliche Erhöhung der Leistung der Bearbeitung von Schinkenteilen der Geflügelstücke, weil mit der Einrichtung mehrere Schinkenteile gleichzeitig bearbeitet werden können. Durch den vorhandenen Antrieb wird eine Bewegung aller Zylinder entsprechend einem vorgegebenen Programm gewährleistet.

Nach einem weiteren Ausführungsform der Erfindung bestehen die Träger aus drei axial zueinander liegenden Trommeln- einer mittleren und zwei Seitentrommeln-, wobei auf der mittleren Trommel die Rinnen angeordnet sind und diese Trommel mit einer unbeweglichen Führung versehen ist, die ihre Zylinderfläche in der Bearbeitungszone der Schinkenteile umschließt, während auf den Seitentrommeln die Zylinder der Greifvorrichtung sitzen.

Die vorgeschlagene Konstruktion der Einrichtung gewährleistet eine synchrone Bewegung der Trommeln, durch die die Rinnen und Zylinder der Greifvorrichtung zum Ergreifen der Schinkenteile getragen werden. Das Vorhandensein der Führung gestattet es, die Hohlräume der Rinnen im Zeitpunkt zu überdecken, in dem die Schinkenteile bearbeitet werden, und ein Zusammenklappen der Knochen des Schinkenteils um das Kniegelenk zu vermeiden.

Es ist auch vorteilhaft, daß alle Trommel auf einer gemeinsamen Welle starr angeordnet sind.

Durch eine solche Ausführungsform der Erfindung wird die Bauart der Einrichtung wesentlich vereinfacht. Dadurch, daß die Trommeln auf einer gemeinsamen Welle sitzen, wird der Gleichlauf aller Trommeln gesichert.

Weitere Ziele und Vorteile der vorliegenden Erfindung werden nachstehend an Hand einer ausführlichen Beschreibung einer Ausführungsform unter Bezugnahme auf Zeichnungen erläutert. Es zeigen:

Fig. 1 die Gesamtansicht einer erfindungsgemäßen Einrichtung;
Fig. 2 eine Ansicht in Pfeilrichtung A in Fig. 1;
Fig. 3 einen Schnitt III-III in Fig. 1;
Fig. 4 einen Schnitt IV-IV in Fig. 2;
Fig. 5 einen Schnitt V-V in Fig. 3;

Fig. 6 einen Schnitt VI-VI in Fig. 4;

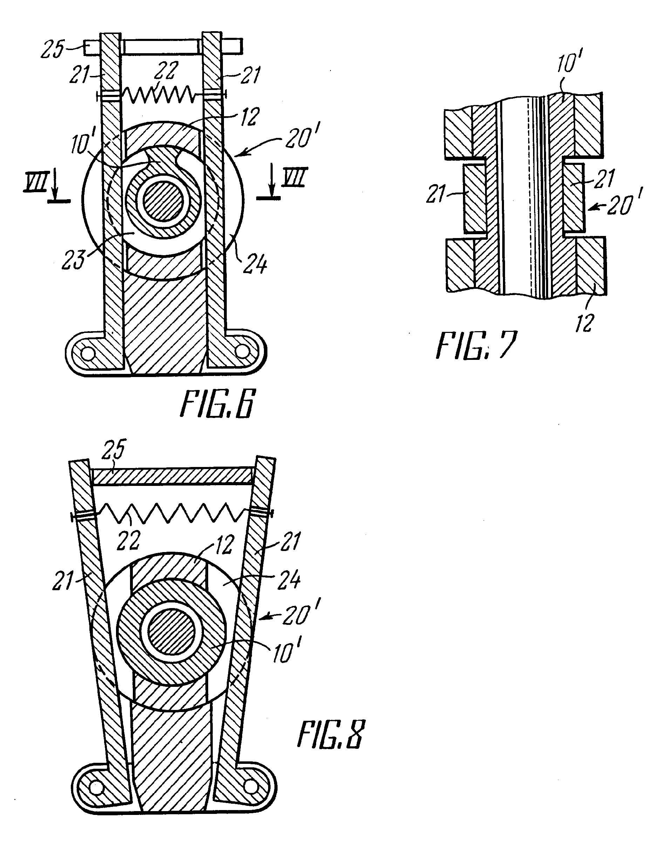

Fig. 7 einen Schnitt VII-VII in Fig. 6;

Fig. 8 einen Schnitt VIII-VIII in Fig. 4.

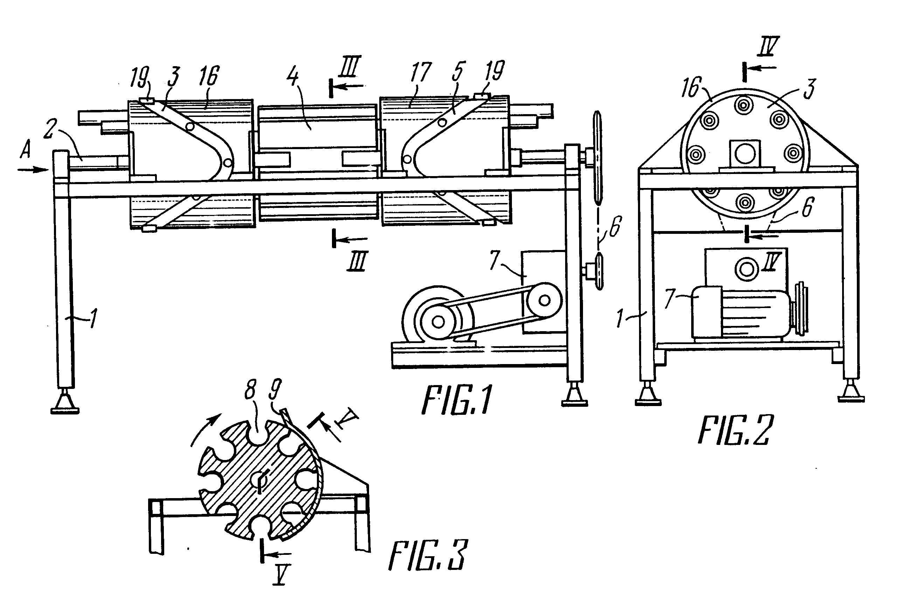

Die Einrichtung zur Entfernung des Fleisches von den Knochen (Beinen) der Schinkenteile (Ober- und Unterschenkel) von Geflügelstücken enthält einen Rahmen 1 (Fig. 1 bis 4), an dem auf einer gemeinsamen Welle 2 drei Trommeln 3, 4, 5 starr angebracht sind. Die Welle 2 ist über ein Kettengetriebe 6 mit einem Antrieb 7 verbunden. Die mittlere Trommel 4 trägt eine Vielzahl von Aufgaberinnen 8, die in Form von Längsaussparungen auf der Zylinderfläche der Trommel 4 über deren ganze Länge ausgeführt sind.

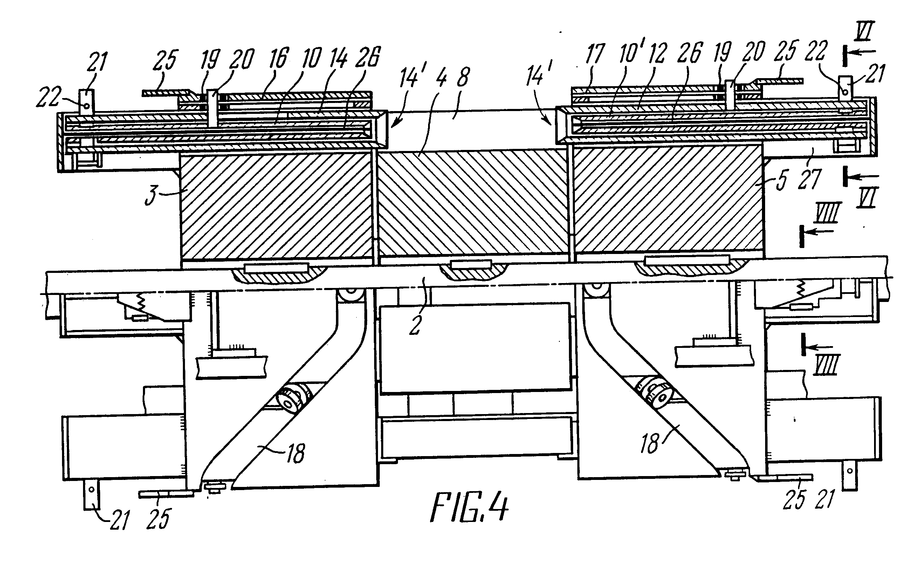

Auf dem Rahmen 1 ist eine unbewegliche Führung 9 (Fig. 3) starr befestigt, die die Zylinderfläche der Trommel 4 in der Bearbeitungszone der Schinkenteile umgibt.

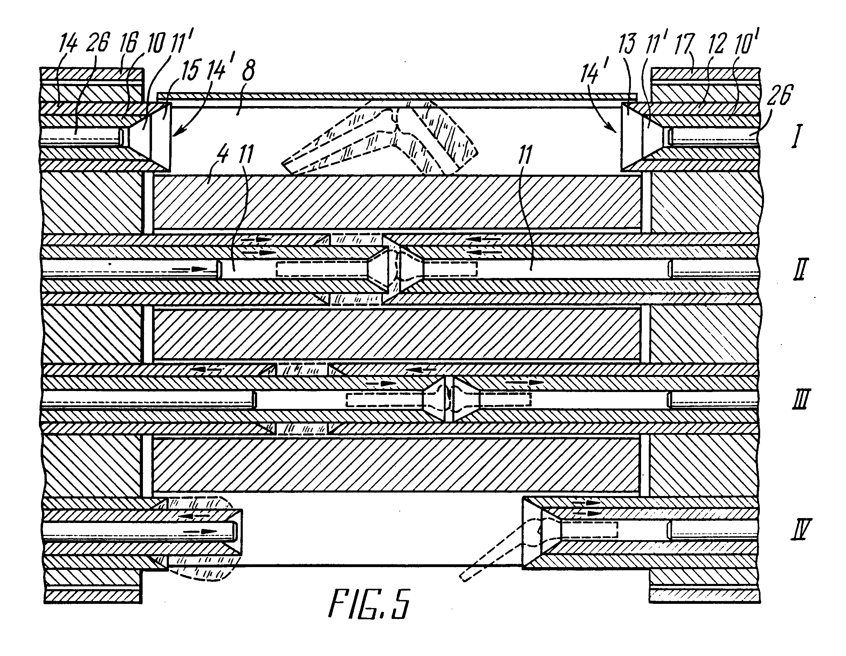

Jede Seitentrommel 3, 5 trägt eine Vielzahl von auf ihrem Kreisumfang gleichmäßig angeordneten Zylindern 10, 10′ (Fig.4,5) mit Hohlräumen 11 für die Unterbringung der Knochen eines Schinkenteils, wobei jeder Zylinder 10 an der Trommel 3 zu einem der Zylinder 10′ der anderen Seitentrommel 5 sowie zur entsprechenden Rinne 8 axial liegt. An den zueinander gekehrten Stirnseiten der Zylinder 10, 10′ sind kegelige Innenausdrehungen 11′ ausgeführt.

Auf jedem Zylinder 10′ sitzt koaxial zu diesem ein Schneidwerkzeug 12- ein Hohlzylinder mit einer stirnseitigen Schneidkante 13-, während auf dem anderen Zylinder 10 koaxial zu ihm ein Hohlzylinder 14 mit einer kegeligen Ausdrehung 15 angeordnet ist, die an dem Stirnende ausgeführt ist, das dem Schneidwerkzeug 12 zugewandt ist. Alle Zylinder 10, 10′ sind hin-und herverschiebbar innerhalb der zugehörigen Rinnen 8 angeordnet. Die Zylinder 10, 10′ bilden zusammen mit den Rinnen 8 eine Greifvorrichtung 14′ zum Ergreifen der Schenkelteile von Geflügelstücken.

Jede Trommel 3, 5 ist koaxial in einer am Rahmen 1 starr befestigten unbeweglichen Kopierschablone 16 bzw. 17 (Fig. 1) angeordnet, die mit einer Rundnut 18 (Fig. 4) versehen ist, durch die sich Rollen 19 wälzen, die an Achsen 20 befestigt sind, die bei der Trommel 3 am Zylinder 10 und bei der Trommel 5 am Schneidwerkzeug 12 starr befestigt sind.

Die Form der Rundnut 18 wird je nach dem Bewegungsgesetzt der Zylinder 10, 10′ berechnet, welches wiederum von den stereometrischen Maßen der Schenkelteile der Geflügstücke abhängt.

Die durch die Trommel 3 getragenen Zylinder 10 und 14 werden miteinander mittels Schlösser 20′ (Fig. 6) in Eingriff gebracht, die jeweils aus zwei am Zylinder 14 gelenkig befestigten und mittels einer Feder 22 zusammengespannten Platten 21 (Fig. 6), einer kreisförmigen Nut 23 auf dem Zylinder 10 und rechteckigen Öffnungen 24 im Zylinder 14 gebildet sind. Die Trommel 5 ist mit Schlössern ähnlicher Bauart versehen, wobei die Öffnungen 24 im Zylinder 12 ausgeführt sind. Die Schlösser werden durch keilförmige Leisten 25 betätigt, die an den Kopierschablonen 16, 17 (Fig. 4) unbeweglich angebracht sind. Im Inneren der Hohlzylinder 10, 10′ sind Anschläge 26 angeordnet, die an Auslegern 27 fest angebracht sind, die am Rahmen 1 befestigt sind.

Die erfindungsgemäße Einrichtung funktioniert wie folgt.

Vor Beginn der Arbeit wird ein Schinkenteil von Hand oder mit Hilfe einer dazu geeigneten Vorrichtung in die obere Rinne 8 der Trommel 4 eingelegt (das ist die erste Arbeitsstufe nach Fig. 5). Beim Einschalten des Antriebs 7 und bei der Drehung der Welle 2 mit den Trommeln 3,4,5 wird die Rinne 8 samt dem Schenkelteil zur Führung 9 hin bewegt, die die Rinne 8 überdeckt, wodurch ein Herausfallen des Schinkenteils verhindert wird. Zur gleichen Zeit werden mit Hilfe der Rundnuten 18 der Kopierschablonen 16, 17 , der Rollen 19 und Achsen 20 die Hohlzylinder 10 über die Trommel 3 und die Zylinder 12 über die Trommel 5 in Längsrichtung und gegenläufig zueinander verschoben, wobei zusammen mit den genannten Zylindern die auf der Trommel 3 befindlichen Zylinder 14 und die auf der Trommel 5 angeordneten Zylinder 10 bewegt werden. In dieser Lage bilden die Zylinderpaare, nämlich Zylinder 10-Zylinder 14 und Zylinder 10′- Zylinder 12 auf der Trommel 5, an den zueinander gekehrten Stirnseiten Kegelflächen, wodurch die Knochenenden des Schinkenteils in die Hohlräume 11 der Zylinder 10, 10′ ungehindert hineingeführt werden. Danach erübrigt sich die weitere Funktion des Zylinders 14, wozu das Schloß 20′ mit Hilfe der keilförmigen Leiste 25 geöffnet wird (Fig. 8), worauf sich der Zylinder nicht mehr bewegt. Die übrigen Elemente setzen die gegenläufige Bewegung fort, bis die Zylinder 10 an das Kniegelenk des Schinkenteils (Arbeitsstufe II in Fig. 5) dicht herangekommen sind. In diesem Augenblick wird das Fleisch durch die Stirnseiten der Zylinder 10, 10′ von den Knochen (außer dem Fleisch des Kniegelenkes) weggeschoben und auf die Zylinder 10, 10′ aufgesetzt. Zu diesem Zeitpunkt wird der auf der Trommel 5 befindliche Zylinder 10′ vom schneidenden Zylinder 12 entkuppelt, und bei der gegenläufigen Verschiebung des Zylinderpaares, und zwar des auf der Trommel 3 befindlichen Zylinders 10 und des Schneidwerkzeuges 12, wird das Fleisch vom Kniegelenk abgeschnitten, das längs des auf der Trommel 3 befindlichen Zylinders 10 um einen Abstand verschoben wird, der den vollständigen Abriß der Sehnenbänder (Arbeitsstufe III in Fig. 5) sichert.

Im weiteren trägt die Form der Rundnuten 18 zur Ausführung der Rückwärtsbewegung des Systems Rollen 19-Achsen 20-Zylinder 10-Zylinder 14 - bei, wodurch das Fleisch von den Zylindern 10 mit Hilfe der Zylinder aus der unteren Rinne 8 auf einen darunter angeordneten Förderer oder in einen Behälter (beides nicht gezeigt) ausgestoßen wird. Die Knochen fallen auch aus der unteren Rinne 8 auf den Förderer oder in den Behälter heraus, jedoch werden sie bei ihrer Festklemmung in den Hohlräumen der Zylinder 10 mit Hilfe der Anschläge 26 (Arbeitsstufe IV in Fig. 5) entfernt. Gleichzeitig damit erfolgt die Vereinigung zu Paaren, d.h.es werden der Zylinder 10 mit dem Zylinder 14 und der Zylinder 10′ mit dem Schneidwerkzeug 12 verbunden worauf der Vorgang der Verarbeitung der Schinkenteile wiederholt wird.

Gewerbliche Anwendbarkeit

Die Erfindung kann zur Verarbeitung von Rohprodukten der industriellen Geflügelzucht beim Auslösen der Knochen aus dem Fleisch der Schinkenteile von ausgenommenem und gerupftem Geflügel verwendet werden.

**Patentansprüche**

1. Einrichtung zur Entfernung des Fleisches von den Knochen der Schenkelteile von Geflügelstücken, die eine Greifvorrichtung(14′) zum Ergreifen eines Sch enkelteils und ein Schneidwerkzeug (12) zum Abschneiden des Fleisches von den Knochen enthält, **dadurch gekennzeichnet,** daß die Greifvorrichtung (14′) zum Ergreifen eines Schenkelteils aus einem Paar von gleichachsigen zueinander hin-und herbewegbar angeordneten Zylindern (10, 10′) mit Hohlräumen (11) für die Unterbringung der Knochen des Schenkelteils, und aus einer Aufgaberinne (8), die die Zylinder (10, 10′) in der Bearbeitungszone des Schenkelteils teilweise umgibt, aufgebaut ist, wobei das Schneidwerkzeug (12) einen Hohlzylinder mit einer stirnseitigen Schneidkante (13) darstellt, der koaxial auf einem der Zylinder (10′) mit der Möglichkeit einer Hin- und Herbewegung innerhalb der Rinne (8) in bezug auf diesen Zylinder (10′) der Greifvorrichtung (14′) angeordnet ist.

2. Einrichtung nach Anspruch 1, **dadurch gekennzeichnet,** daß die Zylinder (10-, 10′) der Greifvorrichtung (14′) an den zueinander gekehrten Stirnseiten kegelige Innenausdrehungen (11′) aufweisen.

3. Einrichtung nach Anspruch 1 oder 2, **dadurch gekennzeichnet,** daß im Hohlraum (11) jedes Zylinders (10, 10′) der Greifvorrichtung (14′) ein zu diesem Zylinder hin-und herbewegbar angeordneter Anschlag (26) untergebracht ist.

4. Einrichtung nach einem der Ansprüche 1 bis 3, **dadurch gekennzeichnet,** daß ein Hohlzylinder (14) auf einem der genannten Zylinder (10) der Greifvorrichtung (14′) koaxial zu diesem und gegenüber dem Schneidwerkzeug (12) mit der Möglichkeit einer Hin- und Herbewegung innerhalb der Rinne (8) in bezug auf die Zylinder (10, 10′) der Greifvorrichtung (14′) angeordnet ist, wobei eines der Stirnenden des Hohlzylinders (14), das dem Schneidwerkzeug (12) zugewandt ist, eine kegelige Ausdrehung (15) aufweist.

5. Einrichtung nach einem der Ansprüche 1 bis 4, dadurch **gekennzeichnet,** daß sie eine Vielzahl von Rinnen (8) und eine dieser entsprechende Paarmenge von auf Trägern angeordneten Zylindern (10, 10′) der Greifvorrichtung (14′) enthält, wobei ein Antrieb (7) für die synchrone Bewegung der Zylinder (10, 10′) und der Rinnen (8) vorgesehen ist, um eine Arbeitsposition zu erzeugen, in der die Schenkelteile des Geflügelstückes bearbeitet werden.

6. Einrichtung nach Anspruch 5, **dadurch gekennzeichnet,** daß die Träger aus drei axial zueinander liegenden Trommeln (3,4,5,), nämlich einer mittleren (4) und zwei Seitentrommeln (3,5) bestehen, wobei auf der mittleren Trommel (4) die Rinnen (8) angeordnet sind und diese Trommel mit einer unbeweglichen Führung (9) versehen ist, die die Zylinderfläche der Trommel (4) in der Bearbeitungszone der Schenkelteile umschließt, während auf den Seitentrommeln (3,5) die Zylinder (10, 10′) der Greifvorrichtung (14′) sitzen.

7. Einrichtung nach Anspruch 6, **dadurch gekennzeichnet,** daß alle Trommeln (3,4,5) auf einer gemeinsamen Welle (2) starr angeordnet sind.

**Claims**

1. An apparatus for boning the thighs of poultry carcasses, the apparatus comprising means (14′) for engaging a thigh and a cutting tool (12) for boning, characterised in that the thigh-engaging means (14′) comprise: a pair of coaxial cylinders (1∅, 1∅′) which have chambers (11) for receiving the thigh bones and which are adapted to reciprocate relatively to one another; and a charging trough (8) which extends to some extent around the cylinders (1∅, 1∅′) in the thigh-processing zone, the boning tool (12) comprising a hollow cylinder having an end cutting edge (13) and disposed coaxially on one of the cylinders (1∅′) with provision for reciprocation in the trough (8) relatively to the last-mentioned cylinder (1∅′).

2. An apparatus according to claim 1, characterised in that the thigh-engaging cylinders (1∅, 1∅′) are formed

with conical recesses (11′) in their facing ends.

3. An apparatus according to claim 1 or 2, characterised in that an abutment (26) is so received in the chamber (11) of each cylinder (1∅, 1∅′) a to be reciprocatable therein.

4. An apparatus according to any of claims 1 to 3, characterised in that a hollow cylinder (14) is disposed on one of the cylinders (1∅) coaxially of such cylinder and opposite the boning tool (12) and has provision for reciprocation in the trough (8) relatively to the cylinders (1∅, 1∅′), that end of the hollow cylinder (14) which is near the boning tool (12) being formed with a conical recess (15).

5. An apparatus according to any of claims 1 to 4, characterised in that it comprises a number of troughs (8) and pairs of thigh-engaging cylinders (1∅, 1∅′) in a corresponding number, the latter cylinders being disposed on supports, a drive (7) for moving the cylinders (1∅, 1∅′) and the troughs (8) synchronously being provided in order to produce an operative position in which the carcass thighs are processed.

6. An apparatus according to claim 5, characterised in that the supports take the form of three drums (3 - 5) disposed in end-to-end coaxial alignment with one another, viz. a central drum (4) and two side drums (3, 5), the troughs (8) being disposed in the central drum (4) and the same having a stationary guide (9) which extends around the cylinder surface of the drum (4) in the thigh-processing zone, the thigh-engaging cylinders (1∅, 1∅′) being disposed on the side drums (3, 5).

7. An apparatus according to claim 6, characterised in that all the drums (3 - 5) are rigidly mounted on a common shaft (2).

**Revendications**

1. Dispositif pour déviander les os des cuisses des oiseaux abattus comportant un dispositif (14′) pour la préhension d'une cuisse et un outil de coupe (12) pour découper la viande des os, caractérisé en ce que le dispositif (14′) de préhension d'une cuisse est constitué par une paire de cylindres coaxiaux (10, 10′) comportant des cavités (11) destinées à recevoir des os d'une cuisse, montés avec possibilité d'effectuer un déplacement rectiligne alternatif mutuel, et par une auge de chargement (8) entourant partiellement lesdits cylindres (10, 10′) dans la zone de traitement d'une cuisse, l'outil de coupe (12) étant dans ce cas réalisé sous la forme d'un cylindre creux comportant une arête tranchante frontale (13) monté coaxialement sur l'un desdits cylindres avec possibilité d'effectuer un déplacement rectiligne alternatif à l'intérieur de l'auge (8) par rapport audit cylindre (10′) du dispositif (14).

2. dispositif selon la revendication 1, caractérisé en ce des évidements coniques intérieurs (11′) sont pratiqués sur les faces extrêmes orientées l'une vers l'autre des cylindres (10, 10′) du dispositif (14′).

3. Dispositif selon l'une des revendications 1 ou 2, caractérisé en ce qu'une butée (26) est montée dans la cavité (11) de chaque cylindre (10, 10′) du dispositif de préhension (14′) avec possibilité de déplacement rectiligne alternatif par rapport audit cylindre.

4. Dispositif selon l'une des revendications 1 à 3, caractérisé en ce qu'un cylindre creux (14) est monté sur l'un desdits cylindres (10) du dispositif de préhension (14′) en face de l'outil de coupe (12) et coaxialement de façon à pouvoir effectuer un déplacement rectiligne alternatif à l'intérieur de l'auge (8) par rapport aux cylindres (10, 10′) du dispositif de préhension (14′) et en ce qu'un évidement conique (15) est pratiqué sur l'une des faces extrêmes du cylindre (14) orientées vers l'outil de coupe (12).

5. Dispositif selon la revendication 1, caractérisé en ce qu'il comporte une pluralité d'auges (8) et un nombre correspondant de paires de cylindres (10, 10′) du dispositif de préhension (14′) montés sur des éléments porteur, et en ce que les moyens d'entraînement (7) sont prévus pour mettre les cylindres (10, 10′) et les auges (8) en mouvement synchronisé en vue d'obtenir la position de travail du traitement des cuisses des oiseaux abattus.

6. Dispositif selon la revendication 5, caractérisé en ce que les éléments porteurs sont constitués par trois tambours (3, 4, 5), dont un tambour (4) est médian et les deux autres tambours (3, 5) sont latéraux, en ce qque les auges (8) sont montées sur le tambour médian (4), et en ce que le tambour médian (4) est pourvu d'un guidage (9) qui entoure sa surface cylindrique dans la zone de traitement des cuisses et en ce que les cylindres (10, 10′) des dispositifs de préhension (14′) sont montés sur les tambours latéraux (3, 5).

7. Dispositif selon la revendication 6, caractérisé en ce que tous les tambours (3, 4, 5) sont montés rigidement sur un arbre commun (2).

FIG.2

FIG.1

FIG.3

FIG.4

FIG.5

FIG.6

FIG. 7

FIG.8